(19)

Europäisches
Patentamt

European
Patent Office

Office européen
des brevets

(11) **EP 4 333 532 A1**

(12) **EUROPEAN PATENT APPLICATION**
published in accordance with Art. 153(4) EPC

(43) Date of publication:
**06.03.2024 Bulletin 2024/10**

(21) Application number: **22794699.3**

(22) Date of filing: **20.04.2022**

(51) International Patent Classification (IPC):
*H04W 72/12* *(2023.01)*

(52) Cooperative Patent Classification (CPC):
**H04W 72/12**

(86) International application number:
**PCT/CN2022/087878**

(87) International publication number:
**WO 2022/228228 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.04.2021 CN 202110483824**

(71) Applicant: **Huawei Technologies Co., Ltd.
Longgang
Shenzhen, Guangdong 518129 (CN)**

(72) Inventors:
• **YANG, Mao**
  **Xi'an, Shaanxi 710072 (CN)**
• **YAN, Zhongjiang**
  **Xi'an, Shaanxi 710072 (CN)**
• **LI, Yunbo**
  **Shenzhen, Guangdong 518129 (CN)**
• **GUO, Yuchen**
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **METHOD AND APPARATUS FOR TRANSMITTING INFORMATION**

(57)     This application provides an information transmission method and an apparatus. The information transmission method includes: A first apparatus sends first indication information to a second apparatus to indicate whether links of the first apparatus have a buffer sharing capability; the first apparatus may further send second indication information to indicate a buffer status; the second apparatus may determine, based on the first indication information or based on the first indication information and the second indication information, a link used by the first apparatus to send buffer data, improving information transmission flexibility and transmission performance, and resolving a problem of waste of resources caused due to a mismatch between resource allocation and an actual requirement.

FIG. 4

**Description**

This application claims priority to Chinese Patent Application No. 202110483 824.9, filed with the China National Intellectual Property Administration on April 30, 2021 and entitled "INFORMATION TRANSMISSION METHOD AND APPARATUS THEREOF", which is incorporated herein by reference in its entirety.

**TECHNICAL FIELD**

This application relates to the communication field, and in particular, to an information transmission method and an apparatus thereof.

**BACKGROUND**

With development of communication technologies, an amount of information transmitted in a communication system continuously increases. This imposes a higher requirement on a wireless local area network (Wireless Local Area Network, WLAN). As one of key technologies in the future, a multi-link operation (Multi-Link Operation, MLO) can support sending and receiving of information by a WLAN device in a multi-band (Multi-band), so that a larger bandwidth can be used for data transmission, thereby significantly improving a throughput rate. However, an existing multi-link device (Multi-Link Device, MLD) information scheduling and transmission mechanism is not flexible enough, a resource report does not match an actual requirement, and a large quantity of resources are easily wasted. Therefore, how to improve information transmission flexibility, avoid waste of resources, and improve transmission performance is an urgent problem to be resolved.

**SUMMARY**

This application provides an information transmission method and an apparatus thereof.

According to a first aspect, an information transmission method is provided. The method is applied to a first MLD, where the first MLD includes N stations STAs, the N STAs relate to N links, N is a positive integer, and the method may include:

The first MLD sends first indication information on a first link, where the first indication information indicates whether links of the first MLD have a buffer sharing capability, the buffer sharing capability is used to determine a link corresponding to to-be-sent buffer data in the first MLD, and the first link is one of the N links.

It should be understood that N is a positive integer, and may be a positive integer greater than or equal to 1, or may be a positive integer greater than or equal to 2. For example, generally, an MLD includes a plurality of STAs, but it is not excluded that the MLD may alternatively include one STA in a functional integration manner or in another manner.

In the method, whether links of an MLD in which the first MLD is located have the buffer sharing capability may be indicated to a second MLD by sending indication information, resolving a problem that the second MLD cannot obtain whether the links of the first MLD have the buffer sharing capability. The second MLD may use the first indication information as a reference factor to determine a scheduled link, avoiding a problem that the first MLD cannot prepare buffer data because the link scheduled by the second MLD and a sending link of the first MLD do not have the sharing capability

With reference to the first aspect, in some implementations of the first aspect, the method may further include:

The first MLD sends second indication information on a second link, where the second link is one of the N links, the second indication information indicates a buffer status, the second link corresponds to a first STA, and the to-be-sent buffer data is buffer data of the first STA.

It should be understood that the buffer status may include a buffer size, and may further include ownership of the buffer size, for example, whether the buffer size is of the first MLD or an STA.

With reference to the first aspect, in some implementations of the first aspect, the second indication information includes a first field, and the first field is used to indicate a buffer size of a buffer; and

> if the first indication information indicates that the links of the first MLD have the buffer sharing capability, the first field is used to indicate a buffer size of the first MLD; or
> if the first indication information indicates that the links of the first MLD do not have the buffer sharing capability, the first field is used to indicate a buffer size of the first MLD.

With reference to the first aspect, in some implementations of the first aspect, the second indication information includes a second field, and the second field is used to indicate that the buffer status is a BSR of the first MLD or a buffer status of the first MLD.

With reference to the first aspect, in some implementations of the first aspect, the method may further include:

The first MLD receives a trigger frame TF on a third link, where the third link is determined based on the first indication information or based on the first indication information and the second indication information; and the first MLD sends the buffer data of the first STA on the third link.

With reference to the first aspect, in some implementations of the first aspect, the first indication information indicates that the links of the first MLD do not have the buffer sharing capability, and the third link is the second link; or the first indication information indicates that the links of the first MLD have the buffer sharing capability, and the third link is one of the links having the buffer sharing capability

With reference to the first aspect, in some implementations of the first aspect, the method may further include: The first MLD sends second indication information on a second link, where the second link is one of the N links, and the second indication information indicates a buffer status.

With reference to the first aspect, in some implementations of the first aspect, the second indication information may include a first field, and the first field is used to indicate that the buffer status is a buffer status of the first STA or a buffer status of the first MLD.

With reference to the first aspect, in some implementations of the first aspect, the second indication information may include a second field, and the second field is used to indicate a buffer size of a buffer; and

> if the first indication information indicates that the links of the first MLD have the buffer sharing capability, the second field is used to indicate a buffer size of an MLD; or
> if the first indication information indicates that the links of the first MLD do not have the buffer sharing capability, the second field is used to indicate a buffer size of the first STA.

That is, the first MLD may further send the second indication information to indicate a buffer status to the second MLD. Whether the buffer status is of the first STA or an MLD in which the STA is located may be explicitly indicated to the second MLD by using a bit, or may be implicitly indicated to the second MLD by indicating whether links have the buffer sharing capability. For example, for an MLD whose links have the buffer sharing capability, it indicates a total buffer status of the MLD; otherwise, it indicates a buffer status of only one STA.

With reference to the first aspect, in some implementations of the first aspect, the method may further include:

The first MLD receives a trigger frame TF on a third link, where the third link is determined based on the first indication information or based on the first indication information and the second indication information; and the first MLD sends the buffer data of the first STA on the third link.

With reference to the first aspect, in some implementations of the first aspect, the first indication information indicates that links of an MLD do not have the buffer sharing capability, and the third link is the second link; or the first indication information indicates that links of an MLD have the buffer sharing capability, and the third link is one of the links having the buffer sharing capability.

It should be understood that when the links of the MLD have the buffer sharing capability, selection of the third link may be affected by another factor. For example, a link cannot be selected if it is temporarily closed.

In this solution, a path for transmitting information by a first apparatus is determined based on the indication of the buffer sharing capability or based on the indication of the buffer sharing capability and buffer status report information. In this way, a problem that a scheduled link cannot share a buffer is avoided, a link that can completely send service information is further determined based on the buffer status, and furthermore, resources can be properly allocated, further improving information transmission flexibility.

With reference to the first aspect, in some implementations of the first aspect, the first indication information may include a third field; and

> when a value of the third field is a first value, it may indicate that any two of the N links have the buffer sharing capability, and when the value of the third field is a second value, it may indicate that any two of the N links do not have the buffer sharing capability; or
> when the value of the third field is the first value, it may indicate that any two of the N links do not have the buffer sharing capability, and when the value of the third field is the second value, it may indicate that any two of the N links have the buffer sharing capability

With reference to the first aspect, in some implementations of the first aspect, the third field may include one bit.

It should be understood that the first value may be 1, and the second value may be 0; or the first value may be 0, and the second value may be 1.

With reference to the first aspect, in some implementations of the first aspect, the first indication information may be located in a multi-link device capability MLD capability field.

With reference to the first aspect, in some implementations of the first aspect, the first indication information includes a buffer sharing delay field, and the buffer sharing delay field is used to indicate a delay between a time for receiving the TF by the first MLD and a time for sending the buffer data.

With reference to the first aspect, in some implementations of the first aspect, a value of the buffer sharing delay field may be a first preset value, the first preset value is less than a first threshold, and the buffer sharing delay field may be used to indicate that any two of the N links have the buffer sharing capability, or

a value of the buffer sharing delay field may be a second preset value, the second preset value is greater than or equal to the first threshold, and the buffer sharing delay field may be used to indicate that any two of the N links do not have the buffer sharing capability.

It should be understood that buffer delays of links may be different due to different MLD capabilities. The buffer sharing delay field may indicate a buffer sharing delay, and the delay may further be used as a reference condition to indicate whether the links can share a buffer.

With reference to the first aspect, in some implementations of the first aspect, the buffer sharing delay field may be located in a multi-link device capability MLD capability field.

With reference to the first aspect, in some implementations of the first aspect, the first indication information may include a buffer sharing indication field. The buffer sharing indication field may include a buffer sharing indication bitmap. The buffer sharing indication bitmap may include m bits. A value of each bit may be used to indicate whether links of a first link pair have the buffer sharing capability. The links of the first link pair may be a link indicated by a first link identifier and a link indicated by a second link identifier. The first link identifier may be a link identifier included in a per-station profile sub-element. The second link identifier may be a link identifier included in station control (STA control) information. The buffer sharing indication bitmap may be located in station information STA Info of the per-station profile sub-element.

With reference to the first aspect, in some implementations of the first aspect, when a value of an $i^{th}$ bit in the buffer sharing indication bitmap is 1, it may indicate that the links of the first link pair have the buffer sharing capability; and when the value of the $i^{th}$ bit in the buffer sharing indication bitmap is 0, it may indicate that the links of the first link pair do not have the buffer sharing capability; or

when a value of an $i^{th}$ bit in the buffer sharing indication bitmap is 1, it may indicate that the links of the first link pair do not have the buffer sharing capability; and when the value of the $i^{th}$ bit in the buffer sharing indication bitmap is 0, it may indicate that the links of the first link pair have the buffer sharing capability, where

$$0 \leq i \leq n-1,$$

and the second link identifier is link i.

With reference to the first aspect, in some implementations of the first aspect, the per-station profile sub-element may further include a buffer sharing indication, and the buffer sharing indication is used to indicate whether a buffer sharing indication bitmap appears in the STA Info.

With reference to the first aspect, in some implementations of the first aspect, the first indication information may include a buffer delay indication bitmap. The buffer delay indication bitmap may include k fields. A value of each field may be used to indicate whether links of a second link pair have the buffer sharing capability. The links of the second link pair is a link indicated by a third link identifier and a link indicated by a fourth link identifier. The third link identifier is a link identifier included in a per-station profile sub-element. The fourth link identifier is a link identifier included in station control (STA control) information. The buffer delay indication bitmap is located in station information STA Info of the per-station profile sub-element, where 0≤j≤k-1.

With reference to the first aspect, in some implementations of the first aspect, a value of a $j^{th}$ field in the buffer delay indication bitmap may be a third preset value, the third preset value is less than a second threshold, and the $j^{th}$ field is used to indicate that the links of the first link pair have the buffer sharing capability; or

a value of a $j^{th}$ field in the buffer delay indication bitmap may be a fourth preset value, the fourth preset value is greater than or equal to a second threshold, and the $j^{th}$ field is used to indicate that the links of the first link pair have the buffer sharing capability, where

$$0 \leq j \leq k-1,$$

, and the fourth link identifier is link j .

With reference to the first aspect, in some implementations of the first aspect, the per-station profile sub-element may further include a buffer delay indication, and the buffer delay indication is used to indicate whether a buffer delay indication bitmap appears in the station information STA Info.

With reference to the first aspect, in some implementations of the first aspect, the first indication information may include a buffer sharing capability indication bitmap, the buffer sharing capability indication bitmap may include N fields, the N fields are in a one-to-one correspondence with the N links, and each field includes one bit; and

a link corresponding to a field whose value is 0 has the buffer sharing capability with a link corresponding to another field whose value is 0, and a link corresponding to a field whose value is 1 does not have the buffer sharing capability with any other link; or
a link corresponding to a field whose value is 0 does not have the buffer sharing capability with any other link, and a link corresponding to a field whose value is 1 has the buffer sharing capability with another field whose value is 1.

With reference to the first aspect, in some implementations of the first aspect, the first indication information may include a buffer sharing capability indication bitmap, the buffer sharing capability indication bitmap includes N fields, each of the N fields includes at least two bits, and the N fields are in a one-to-one correspondence with the N links; and a link corresponding to a field whose value is a third value does not have the buffer sharing capability with any other link, and a link corresponding to a field whose value is not the third value has the buffer sharing capability with a link corresponding to a field having a same value.

It should be understood that the foregoing value of the bit or the field is merely an example. The value may be the first value or the second value. The first value and the second value may be determined based on changes in a quantity of bits and a number system. For example, the first value and the second value may be 0 or 1 in a unary numeral system, and may be corresponding values in another number system. This is not limited in this application.

According to a second aspect, an information transmission method is provided. The method is applied to a second MLD, where the second MLD includes N access points APs, the NAPs relate to N links, N is a positive integer, and the method may include:

The second MLD receives first indication information on a first link, where the first indication information indicates whether links of a first MLD have a buffer sharing capability, the buffer sharing capability is used by the second MLD to determine a link corresponding to to-be-received buffer data, and the first link is one of the N links.

It should be understood that N is a positive integer, and may be a positive integer greater than or equal to 1, or may be a positive integer greater than or equal to 2. For example, generally, an MLD includes a plurality of APs, but it is not excluded that the MLD may alternatively include one AP in a functional integration manner or in another manner.

In the method, whether the links of the first MLD have the buffer sharing capability may be indicated to the second MLD by sending indication information, resolving a problem that the second MLD cannot obtain whether the links of the first MLD have the buffer sharing capability. The second MLD may use the first indication information as a reference factor to determine a scheduled link, avoiding a problem that the first STA cannot prepare buffer data because the link scheduled by the second MLD and a sending link of the first STA do not have the sharing capability.

With reference to the second aspect, in some implementations of the second aspect, the method may further include:

The second MLD receives second indication information on a second link, where the second link is one of the N links, the second indication information indicates a buffer status, the second link corresponds to a first STA, and the to-be-received buffer data is buffer data of the first STA.

With reference to the second aspect, in some implementations of the second aspect, the second indication information includes a first field, and the first field is used to indicate a buffer size of a buffer; and

if the first indication information indicates that the links of the first MLD have the buffer sharing capability, the first field is used to indicate a buffer size of the first MLD; or
if the first indication information indicates that the links of the first MLD do not have the buffer sharing capability, the first field is used to indicate a buffer size of the first STA.

With reference to the second aspect, in some implementations of the second aspect, the second indication information includes a second field, the second field is used to indicate that the buffer status is a buffer status of the first STA or a buffer status of the first MLD.

With reference to the second aspect, in some implementations of the second aspect, the method may further include:

The second MLD sends a trigger frame TF on a third link, where the third link is determined based on the first indication information or based on the first indication information and the second indication information; and the second MLD receives the buffer data of the first STA on the third link.

With reference to the second aspect, in some implementations of the second aspect, the first indication information indicates that the links of the first MLD do not have the buffer sharing capability, and the third link is the second link; or
the first indication information indicates that the links of the first MLD have the buffer sharing capability, and the third link is one of the links having the buffer sharing capability

It should be understood that when the links of the MLD have the buffer sharing capability, selection of the third link may be affected by another factor. For example, a link cannot be selected if it is temporarily closed.

In this solution, a path for transmitting information by the first MLD is determined based on the indication of the buffer sharing capability or based on the indication of the buffer sharing capability and buffer status report information. In this way, a problem that a scheduled link cannot share a buffer is avoided, a link that can completely send service information is further determined based on the buffer status, and furthermore, resources can be properly allocated, further improving information transmission flexibility.

With reference to the second aspect, in some implementations of the second aspect, the first indication information may include a third field; and

> when a value of the third field is a first value, it may indicate that any two of the N links have the buffer sharing capability, and when the value of the third field is a second value, it may indicate that any two of the N links do not have the buffer sharing capability; or
> when the value of the third field is the first value, it may indicate that any two of the N links do not have the buffer sharing capability, and when the value of the third field is the second value, it may indicate that any two of the N links have the buffer sharing capability

With reference to the second aspect, in some implementations of the second aspect, the third field may include one bit.

It should be understood that the first value may be 1, and the second value may be 0; or the first value may be 0, and the second value may be 1.

With reference to the second aspect, in some implementations of the second aspect, the first indication information may be located in a multi-link device capability MLD capability field.

With reference to the second aspect, in some implementations of the second aspect, the first indication information includes a buffer sharing delay field, and the buffer sharing delay field is used to indicate a delay between a time for receiving the TF by the first MLD and a time for sending the buffer data.

With reference to the second aspect, in some implementations of the second aspect, a value of the buffer sharing delay field may be a first preset value, the first preset value is less than a first threshold, and the buffer sharing delay field may be used to indicate that any two of the N links have the buffer sharing capability, or a value of the buffer sharing delay field may be a second preset value, the second preset value is greater than or equal to the first threshold, and the buffer sharing delay field may be used to indicate that any two of the N links do not have the buffer sharing capability.

It should be understood that buffer delays of links may be different due to different MLD capabilities. The buffer sharing delay field may indicate a buffer sharing delay, and the delay may further be used as a reference condition to indicate whether the links can share a buffer.

With reference to the second aspect, in some implementations of the second aspect, the buffer sharing delay field may be located in a multi-link device capability MLD capability field.

With reference to the second aspect, in some implementations of the second aspect, the first indication information may include a buffer sharing indication field. The buffer sharing indication field may include a buffer sharing indication bitmap. The buffer sharing indication bitmap may include m bits. A value of each bit may be used to indicate whether links of a first link pair have the buffer sharing capability. The links of the first link pair may be a link indicated by a first link identifier and a link indicated by a second link identifier. The first link identifier may be a link identifier included in a per-station profile sub-element. The second link identifier may be a link identifier included in station control (STA control) information. The buffer sharing indication bitmap may be located in station information STA Info of the per-station profile sub-element.

With reference to the second aspect, in some implementations of the second aspect, when a value of an $i^{th}$ bit in the buffer sharing indication bitmap is 1, and it may indicate that the links of the first link pair have the buffer sharing capability; and when the value of the $i^{th}$ bit in the buffer sharing indication bitmap is 0, it may indicate that the links of the first link pair do not have the buffer sharing capability; or when a value of an $i^{th}$ bit in the buffer sharing indication bitmap is 1, it may indicate that the links of the first link pair do not have the buffer sharing capability; and when the value of the $i^{th}$ bit in the buffer sharing indication bitmap is 0, it may indicate that the links of the first link pair have the buffer sharing capability, where

$$0 \leq i \leq n-1,$$

and the second link identifier is link i.

With reference to the second aspect, in some implementations of the second aspect, the per-station profile sub-element may further include a buffer sharing indication, and the buffer sharing indication is used to indicate whether a buffer sharing indication bitmap appears in the STA Info.

With reference to the second aspect, in some implementations of the second aspect, the first indication information may include a buffer delay indication bitmap. The buffer delay indication bitmap may include k fields. A value of each field may be used to indicate whether links of a second link pair have the buffer sharing capability. The links of the second link pair is a link indicated by a third link identifier and a link indicated by a fourth link identifier. The third link identifier is a link identifier included in a per-station profile sub-element. The fourth link identifier is a link identifier included in station control (STA control) information. The buffer delay indication bitmap is located in station information STA Info of the per-station profile sub-element, where $0 \leq j \leq k-1$.

With reference to the second aspect, in some implementations of the second aspect, a value of a $j^{th}$ field in the buffer delay indication bitmap may be a third preset value, the third preset value is less than a second threshold, and the $j^{th}$ field is used to indicate that the links of the first link pair have the buffer sharing capability; or

a value of a $j^{th}$ field in the buffer delay indication bitmap may be a fourth preset value, the fourth preset value is greater than or equal to a second threshold, and the $j^{th}$ field is used to indicate that the links of the first link pair have the buffer sharing capability, where

$$0 \leq j \leq k-1,$$

and the fourth link identifier is link j .

With reference to the second aspect, in some implementations of the second aspect, the per-station profile sub-element may further include a buffer delay indication, and the buffer delay indication is used to indicate whether a buffer delay indication bitmap appears in the station information STAInfo.

With reference to the second aspect, in some implementations of the second aspect, the first indication information may include a buffer sharing capability indication bitmap, the buffer sharing capability indication bitmap may include N fields, the N fields are in a one-to-one correspondence with the N links, and each field includes one bit; and

a link corresponding to a field whose value is 0 has the buffer sharing capability with a link corresponding to another field whose value is 0, and a link corresponding to a field whose value is 1 does not have the buffer sharing capability with any other link; or
a link corresponding to a field whose value is 0 does not have the buffer sharing capability with any other link, and a link corresponding to a field whose value is 1 has the buffer sharing capability with another field whose value is 1.

With reference to the second aspect, in some implementations of the second aspect, the first indication information may include a buffer sharing capability indication bitmap, the buffer sharing capability indication bitmap includes N fields, each of the N fields includes at least two bits, and the N fields are in a one-to-one correspondence with the N links; and

a link corresponding to a field whose value is a third value does not have the buffer sharing capability with any other link, and a link corresponding to a field whose value is not the third value has the buffer sharing capability with a link corresponding to a field having a same value.

According to a third aspect, a communication apparatus is provided. The apparatus may include a transceiver unit and a processing unit. The transceiver unit is configured to send first indication information on a first link, where the first indication information indicates whether links of a first MLD have a buffer sharing capability, the buffer sharing capability is used to determine a link corresponding to to-be-sent buffer data in the first MLD, and the first link is one of N links.

With reference to the third aspect, in some implementations of the third aspect, the transceiver unit is further configured to send second indication information on a second link, where the second link is one of the N links, and the second indication information indicates a buffer status.

With reference to the third aspect, in some implementations of the third aspect, the second indication information may include a first field, and the first field is used to indicate that the buffer status is a buffer status of a first STA or a buffer status of an MLD.

With reference to the third aspect, in some implementations of the third aspect, the second indication information may include a second field, and the second field is used to indicate a buffer size of a buffer; and

if the first indication information indicates that the links of the first MLD have the buffer sharing capability, the second field is used to indicate a buffer size of an MLD; or
if the first indication information indicates that the links of the first MLD do not have the buffer sharing capability, the second field is used to indicate a buffer size of the first STA.

With reference to the third aspect, in some implementations of the third aspect, the transceiver unit is further configured to: receive a trigger frame TF on a third link, where the third link may be determined based on the first indication information or based on the first indication information and the second indication information; and send buffer data of the first STA on the third link.

With reference to the third aspect, in some implementations of the third aspect, the first indication information indicates that links of an MLD do not have the buffer sharing capability, and the third link is the second link; or

the first indication information indicates that links of an MLD have the buffer sharing capability, and the third link is one of the links having the buffer sharing capability.

It should be understood that when the links of the MLD have the buffer sharing capability, selection of the third link may be affected by another factor. For example, a link cannot be selected if it is temporarily closed.

With reference to the third aspect, in some implementations of the third aspect, the first indication information may include a third field; and

when a value of the third field is a first value, it may indicate that any two of the N links have the buffer sharing capability, and when the value of the third field is a second value, it may indicate that any two of the N links do not have the buffer sharing capability; or

when the value of the third field is the first value, it may indicate that any two of the N links do not have the buffer sharing capability, and when the value of the third field is the second value, it may indicate that any two of the N links have the buffer sharing capability

With reference to the third aspect, in some implementations of the third aspect, the third field may include one bit.

It should be understood that the first value may be 1, and the second value may be 0; or the first value may be 0, and the second value may be 1.

With reference to the third aspect, in some implementations of the third aspect, the first indication information may be located in a multi-link device capability MLD capability field.

With reference to the third aspect, in some implementations of the third aspect, the first indication information includes a buffer sharing delay field, and the buffer sharing delay field is used to indicate a delay between a time for receiving the TF by the transceiver unit and a time for sending the buffer data.

With reference to the third aspect, in some implementations of the third aspect, a value of the buffer sharing delay field may be a first preset value, the first preset value is less than a first threshold, and the buffer sharing delay field may be used to indicate that any two of the N links have the buffer sharing capability, or

a value of the buffer sharing delay field may be a second preset value, the second preset value is greater than or equal to the first threshold, and the buffer sharing delay field may be used to indicate that any two of the N links do not have the buffer sharing capability.

With reference to the third aspect, in some implementations of the third aspect, the buffer sharing delay field may be located in a multi-link device capability MLD capability field.

With reference to the third aspect, in some implementations of the third aspect, the first indication information may include a buffer sharing indication field. The buffer sharing indication field may include a buffer sharing indication bitmap. The buffer sharing indication bitmap may include m bits. A value of each bit may be used to indicate whether links of a first link pair have the buffer sharing capability. The links of the first link pair may be a link indicated by a first link identifier and a link indicated by a second link identifier. The first link identifier may be a link identifier included in a per-station profile sub-element. The second link identifier may be a link identifier included in station control (STA control) information. The buffer sharing indication bitmap may be located in station information STA Info of the per-station profile sub-element.

With reference to the third aspect, in some implementations of the third aspect, when a value of an $i^{th}$ bit in the buffer sharing indication bitmap is 1, it may indicate that the links of the first link pair have the buffer sharing capability; and when the value of the $i^{th}$ bit in the buffer sharing indication bitmap is 0, it may indicate that the links of the first link pair do not have the buffer sharing capability; or

when a value of an $i^{th}$ bit in the buffer sharing indication bitmap is 1, it may indicate that the links of the first link pair do not have the buffer sharing capability; and when the value of the $i^{th}$ bit in the buffer sharing indication bitmap is 0, it may indicate that the links of the first link pair have the buffer sharing capability, where

$$0 \leq i \leq n-1,$$

and the second link identifier is link i.

With reference to the third aspect, in some implementations of the third aspect, the per-station profile sub-element may further include a buffer sharing indication, and the buffer sharing indication is used to indicate whether a buffer sharing indication bitmap appears in the STA Info.

With reference to the third aspect, in some implementations of the third aspect, the first indication information may include a buffer delay indication bitmap. The buffer delay indication bitmap may include k fields. A value of each field may be used to indicate whether links of a second link pair have the buffer sharing capability. The links of the second link pair is a link indicated by a third link identifier and a link indicated by a fourth link identifier. The third link identifier is a link identifier included in a per-station profile sub-element. The fourth link identifier is a link identifier included in station control (STA control) information. The buffer delay indication bitmap is located in station information STA Info of the per-station profile sub-element, where $0 \leq j \leq k-1$.

With reference to the third aspect, in some implementations of the third aspect, a value of a $j^{th}$ field in the buffer delay indication bitmap may be a third preset value, the third preset value is less than a second threshold, and the $j^{th}$ field is used to indicate that the links of the first link pair have the buffer sharing capability; or

a value of a $j^{th}$ field in the buffer delay indication bitmap may be a fourth preset value, the fourth preset value is greater than or equal to a second threshold, and the $j^{th}$ field is used to indicate that the links of the first link pair have the buffer sharing capability, where

$$0 \leq j \leq k-1,$$

and the fourth link identifier is link j .

With reference to the third aspect, in some implementations of the third aspect, the per-station profile sub-element may further include a buffer delay indication, and the buffer delay indication is used to indicate whether a buffer delay indication bitmap appears in the station information STAInfo.

With reference to the third aspect, in some implementations of the third aspect, the first indication information may include a buffer sharing capability indication bitmap. The buffer sharing capability indication bitmap may include N fields. The N fields are in a one-to-one correspondence with the N links. Each field includes one bit. A link corresponding to a field whose value is 0 has the buffer sharing capability with a link corresponding to another field whose value is 0. A link corresponding to a field whose value is 1 does not have the buffer sharing capability with any other link; or

a link corresponding to a field whose value is 0 does not have the buffer sharing capability with any other link, and a link corresponding to a field whose value is 1 has the buffer sharing capability with another field whose value is 1.

With reference to the third aspect, in some implementations of the third aspect, the first indication information may include a buffer sharing capability indication bitmap, the buffer sharing capability indication bitmap includes N fields, each of the N fields includes at least two bits, and the N fields are in a one-to-one correspondence with the N links; and

a link corresponding to a field whose value is a third value does not have the buffer sharing capability with any other link, and a link corresponding to a field whose value is not the third value has the buffer sharing capability with a link corresponding to a field having a same value.

According to a fourth aspect, a communication apparatus is provided. The apparatus may include a transceiver unit and a processing unit. An information transmission method is applied to a multi-link device MLD. An MLD includes N access points APs. The MLD includes N links, and N is a positive integer greater than or equal to 2. The NAPs are in a one-to-one correspondence with the N links. The method may include:

A first AP receives first indication information on a first link, where the first indication information indicates whether links of the MLD have a buffer sharing capability, the buffer sharing capability is used to determine a link on which a first STA sends buffer data, and the first link is one of the N links.

In the method, whether links of an MLD in which the first STA is located have the buffer sharing capability may be indicated to the first AP by sending indication information, resolving a problem that the first AP cannot obtain whether links of the first STAhave the buffer sharing capability. The first AP may use the first indication information as a reference factor to determine a scheduled link, avoiding a problem that the first STA cannot prepare buffer data because a link scheduled by the first AP and a sending link of the first STA do not have the sharing capability.

According to a fourth aspect, a communication apparatus is provided. The communication apparatus may include a transceiver unit and a processing unit.

The transceiver unit is configured to receive first indication information on a first link, where the first indication information indicates whether links of a first MLD have a buffer sharing capability, the buffer sharing capability is used by the processing unit to determine a link corresponding to to-be-received buffer data, and the first link is one of N links.

With reference to the fourth aspect, in some implementations of the fourth aspect, the transceiver unit is further configured to receive second indication information on a second link, where the second link is one of the N links, the second indication information indicates a buffer status, the second link corresponds to a first STA, and the to-be-received buffer data is buffer data of the first STA.

With reference to the fourth aspect, in some implementations of the fourth aspect, the second indication information includes a first field, and the first field is used to indicate a buffer size of a buffer; and

> if the first indication information indicates that the links of the first MLD have the buffer sharing capability, the first field is used to indicate a buffer size of the first MLD; or
> if the first indication information indicates that the links of the first MLD do not have the buffer sharing capability, the first field is used to indicate a buffer size of the first STA.

With reference to the fourth aspect, in some implementations of the fourth aspect, the second indication information includes a second field, the second field is used to indicate that the buffer status is a buffer status of the first STA or a buffer status of the first MLD.

With reference to the fourth aspect, in some implementations of the fourth aspect, the transceiver unit is further configured to: send a trigger frame TF on a third link, where the third link is determined based on the first indication information or based on the first indication information and the second indication information; and receive buffer data of the first STA on the third link.

With reference to the fourth aspect, in some implementations of the fourth aspect, the first indication information indicates that the links of the first MLD do not have the buffer sharing capability, and the third link is the second link; or the first indication information indicates that the links of the first MLD have the buffer sharing capability, and the third link is one of the links having the buffer sharing capability

It should be understood that when the links of the MLD have the buffer sharing capability, selection of the third link may be affected by another factor. For example, a link cannot be selected if it is temporarily closed.

In this solution, a path for transmitting information by the first MLD is determined based on the indication of the buffer sharing capability or based on the indication of the buffer sharing capability and buffer status report information. In this way, a problem that a scheduled link cannot share a buffer is avoided, a link that can completely send service information is further determined based on the buffer status, and furthermore, resources can be properly allocated, further improving information transmission flexibility.

With reference to the fourth aspect, in some implementations of the fourth aspect, the first indication information may include a third field; and

> when a value of the third field is a first value, it may indicate that any two of the N links have the buffer sharing capability, and when the value of the third field is a second value, it may indicate that any two of the N links do not have the buffer sharing capability; or
> when the value of the third field is the first value, it may indicate that any two of the N links do not have the buffer sharing capability, and when the value of the third field is the second value, it may indicate that any two of the N links have the buffer sharing capability

With reference to the fourth aspect, in some implementations of the fourth aspect, the third field may include one bit.

It should be understood that the first value may be 1, and the second value may be 0; or the first value may be 0, and the second value may be 1.

With reference to the fourth aspect, in some implementations of the fourth aspect, the first indication information may be located in a multi-link device capability MLD capability field.

With reference to the fourth aspect, in some implementations of the fourth aspect, the first indication information includes a buffer sharing delay field, and the buffer sharing delay field is used to indicate a delay between a time for receiving the TF by the first MLD and a time for sending the buffer data.

With reference to the fourth aspect, in some implementations of the fourth aspect, a value of the buffer sharing delay field may be a first preset value, the first preset value is less than a first threshold, and the buffer sharing delay field may be used to indicate that any two of the N links have the buffer sharing capability, or a value of the buffer sharing delay field may be a second preset value, the second preset value is greater than or equal to the first threshold, and the buffer sharing delay field may be used to indicate that any two of the N links do not have the buffer sharing capability.

It should be understood that buffer delays of links may be different due to different MLD capabilities. The buffer sharing delay field may indicate a buffer sharing delay, and the delay may further be used as a reference condition to indicate whether the links can share a buffer.

With reference to the fourth aspect, in some implementations of the fourth aspect, the buffer sharing delay field may be located in a multi-link device capability MLD capability field.

With reference to the fourth aspect, in some implementations of the fourth aspect, the first indication information may include a buffer sharing indication field. The buffer sharing indication field may include a buffer sharing indication bitmap. The buffer sharing indication bitmap may include m bits. A value of each bit may be used to indicate whether links of a first link pair have the buffer sharing capability. The links of the first link pair may be a link indicated by a first link identifier and a link indicated by a second link identifier. The first link identifier may be a link identifier included in a per-station profile sub-element. The second link identifier may be a link identifier included in station control (STA control) information. The buffer sharing indication bitmap may be located in station information STA Info of the per-station profile sub-element.

With reference to the fourth aspect, in some implementations of the fourth aspect, when a value of an $i^{th}$ bit in the buffer sharing indication bitmap is 1, it may indicate that the links of the first link pair have the buffer sharing capability; and when the value of the $i^{th}$ bit in the buffer sharing indication bitmap is 0, it may indicate that the links of the first link pair do not have the buffer sharing capability; or

when a value of an $i^{th}$ bit in the buffer sharing indication bitmap is 1, it may indicate that the links of the first link pair do not have the buffer sharing capability; and when the value of the $i^{th}$ bit in the buffer sharing indication bitmap is 0, it may indicate that the links of the first link pair have the buffer sharing capability, where

$$0 \leq i \leq n-1,$$

and the second link identifier is link i.

With reference to the fourth aspect, in some implementations of the fourth aspect, the per-station profile sub-element may further include a buffer sharing indication, and the buffer sharing indication is used to indicate whether a buffer sharing indication bitmap appears in the STA Info.

With reference to the fourth aspect, in some implementations of the fourth aspect, the first indication information may include a buffer delay indication bitmap. The buffer delay indication bitmap may include k fields. A value of each field may be used to indicate whether links of a second link pair have the buffer sharing capability. The links of the second link pair is a link indicated by a third link identifier and a link indicated by a fourth link identifier. The third link identifier is a link identifier included in a per-station profile sub-element. The fourth link identifier is a link identifier included in station control (STA control) information. The buffer delay indication bitmap is located in station information STA Info of the per-station profile sub-element, where $0 \leq j \leq k-1$.

With reference to the fourth aspect, in some implementations of the fourth aspect, a value of a $j^{th}$ field in the buffer delay indication bitmap may be a third preset value, the third preset value is less than a second threshold, and the $j^{th}$ field is used to indicate that the links of the first link pair have the buffer sharing capability; or

a value of a $j^{th}$ field in the buffer delay indication bitmap may be a fourth preset value, the fourth preset value is greater than or equal to a second threshold, and the $j^{th}$ field is used to indicate that the links of the first link pair have the buffer sharing capability, where

$$0 \leq j \leq k-1,$$

and the fourth link identifier is link j .

With reference to the fourth aspect, in some implementations of the fourth aspect, the per-station profile sub-element may further include a buffer delay indication, and the buffer delay indication is used to indicate whether a buffer delay indication bitmap appears in the station information STAInfo.

With reference to the fourth aspect, in some implementations of the fourth aspect, the first indication information may include a buffer sharing capability indication bitmap, the buffer sharing capability indication bitmap may include N fields, the N fields are in a one-to-one correspondence with the N links, and each field includes one bit; and

a link corresponding to a field whose value is 0 has the buffer sharing capability with a link corresponding to another field whose value is 0, and a link corresponding to a field whose value is 1 does not have the buffer sharing capability with any other link; or

a link corresponding to a field whose value is 0 does not have the buffer sharing capability with any other link, and a link corresponding to a field whose value is 1 has the buffer sharing capability with another field whose value is 1.

With reference to the fourth aspect, in some implementations of the fourth aspect, the first indication information may include a buffer sharing capability indication bitmap, the buffer sharing capability indication bitmap includes N fields, each of the N fields includes at least two bits, and the N fields are in a one-to-one correspondence with the N links; and a link corresponding to a field whose value is a third value does not have the buffer sharing capability with any other link, and a link corresponding to a field whose value is not the third value has the buffer sharing capability with a link corresponding to a field having a same value.

It should be understood that explanations of the first aspect and the possible implementations of the first aspect are also applicable to the second aspect, the third aspect, or the third aspect. Details are not described herein again.

According to a fifth aspect, a communication device is provided. The communication device may be a terminal device or a chip in a terminal device. The communication device may include a processing unit and a transceiver unit. When the communication device is a terminal device, the processing unit may be a processor, and the transceiver unit may be a transceiver. The terminal device may further include a storage unit, and the storage unit may be a memory. The storage unit is configured to store instructions, and the processing unit executes the instructions stored in the storage unit, so that the terminal device performs the method performed by the terminal device in the foregoing aspects. When the device is a chip in a terminal device, the processing unit may be a processor, and the transceiver unit may be an input/output interface, a pin, a circuit, or the like. The processing unit executes the instructions stored in the storage unit, so that the terminal device performs the method performed by the terminal device in the foregoing aspects. The storage unit may be a storage unit (for example, a register or a cache) in the chip, or may be a storage unit (for example, a read-only memory or a random access memory) located outside the chip in the terminal device.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

When a program is executed, the processor performs the method in any one of the first aspect or the possible implementations of the first aspect by using the transceiver.

According to a sixth aspect, a communication device is provided. The communication device may be a network device or a chip in a network device. The communication device may include a processing unit and a transceiver unit. When the communication device is a network device, the processing unit may be a processor, and the transceiver unit may be a transceiver. The network device may further include a storage unit, and the storage unit may be a memory. The storage unit is configured to store instructions, and the processing unit executes the instructions stored in the storage unit, so that the network device performs the method performed by the network device in the foregoing aspects. When the device is a chip in a network device, the processing unit may be a processor, and the transceiver unit may be an input/output interface, a pin, a circuit, or the like. The processing unit executes the instructions stored in the storage unit, so that the network device performs the method performed by the network device in the foregoing aspects. The storage unit may be a storage unit (for example, a register or a cache) in the chip, or may be a storage unit (for example, a read-only memory or a random access memory) located outside the chip in the network device.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

When a program is executed, the processor performs the method in any one of the second aspect or the possible implementations of the second aspect by using the transceiver.

According to a seventh aspect, a computer-readable storage medium is provided, including a computer program. When the computer program is run on a communication device, the communication device is enabled to perform the method according to any one of the first aspect or the implementations of the first aspect.

According to an eighth aspect, a computer-readable storage medium is provided, including a computer program. When the computer program is run on a communication device, the communication device is enabled to perform the method according to any one of the second aspect or the implementations of the second aspect.

According to a ninth aspect, a computer program product is provided. When the computer program product runs on a computer, the computer is enabled to perform the method according to any one of the first aspect or the implementations of the first aspect.

According to a tenth aspect, a computer program product is provided. When the computer program product runs on a computer, the computer is enabled to perform the method according to any one of the second aspect or the implementations of the second aspect.

It should be noted that the beneficial effects on the apparatus side are similar to the beneficial effects on the method side. For details, refer to the descriptions of the beneficial effects on the method side. Details are not described herein again.

**BRIEF DESCRIPTION OF DRAWINGS**

FIG. 1 shows a communication system applicable to this application;

FIG. 2 is a schematic diagram of a relationship between an MLD, an STA, an AP, and a link that are applicable to this application;

FIG. 3 shows an information transmission method;

FIG. 4 shows an information transmission method applicable to this application;

FIG. 5 shows a frame structure applicable to this application;

FIG. 6 shows another frame structure applicable to this application;

FIG. 7 shows another frame structure applicable to this application;

FIG. 8 shows another frame structure applicable to this application;

FIG. 9 shows another frame structure applicable to this application;

FIG. 10 shows another frame structure applicable to this application;

FIG. 11 is a schematic block diagram of a communication apparatus applicable to this application; and

FIG. 12 is a schematic block diagram of a communication apparatus applicable to this application.

## DESCRIPTION OF EMBODIMENTS

The following describes technical solutions in this application with reference to the accompanying drawings.

The technical solutions of embodiments of this application may be applied to various communication systems, such as a global system for mobile communications (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD), a universal mobile telecommunications system (Universal Mobile Telecommunications System, UMTS), a worldwide interoperability for microwave access (Worldwide Interoperability for Microwave Access, WiMAX) communication system, a future 5th generation (5th Generation, 5G) system, or a new radio (New Radio, NR) system.

A terminal device in the embodiments of this application may also be referred to as user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, a terminal device in a future evolved public land mobile network (Public Land Mobile Network, PLMN), or the like. This is not limited in the embodiments of this application.

A network device in the embodiments of this application may be a device configured to communicate with a terminal device. The network device may be a base transceiver station (Base Transceiver Station, BTS) in a global system for mobile communications (Global System of Mobile communication, GSM) system or a code division multiple access (Code Division Multiple Access, CDMA) system, a NodeB (NodeB, NB) in a wideband code division multiple access (Wideband Code Division Multiple Access, WCDMA) system, an evolved NodeB (Evolved NodeB, eNB or eNodeB) in an LTE system, or a radio controller in a cloud radio access network (Cloud Radio Access Network, CRAN) scenario. Alternatively, the network device may be a relay node, an access point, a vehicle-mounted device, a wearable device, a network device in a future 5G network, a network device in a future evolved PLMN network, or the like. This is not limited in the embodiments of this application.

For ease of understanding of the embodiments of this application, related concepts are briefly described in advance.

1. Link

A WLAN device can send and receive information on a plurality of frequency bands. The plurality of frequency bands include but are not limited to a 2.4 GHz Wi-Fi frequency band, a 5 GHz Wi-Fi frequency band, and a 6 GHz Wi-Fi frequency band. Access and transmission performed on each frequency band are referred to as a link, or access and transmission performed on a frequency range on a same frequency band are referred to as a link.

2. Multi-link device

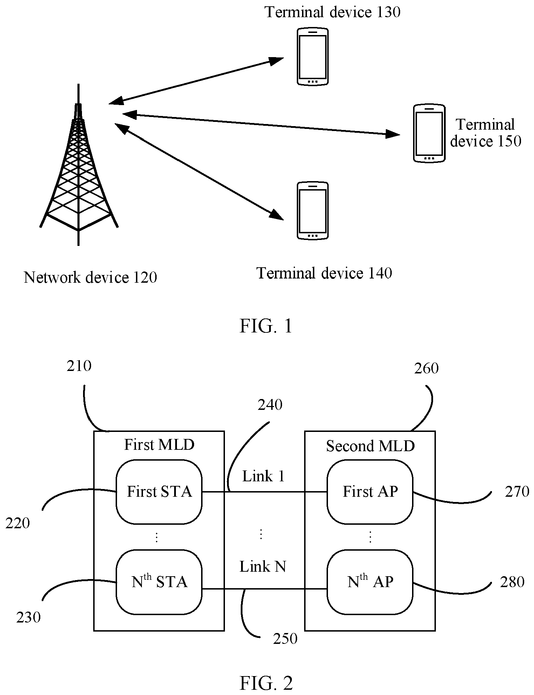

A next-generation IEEE 802.11 standard station device that supports a plurality of links is referred to as a multi-link device (Multi-Link Device, MLD), and an internal entity responsible for any link is referred to as a station (Station, STA). If all STAs in an MLD are non-access point stations, for example, a first STA (220) to an N$^{th}$ STA (230) in FIG. 2, the STAs may further be referred to as non-access point multi-link devices (non-Access Point Station, non-AP STA, that is, a first MLD in this application), for example, a first MLD 210 in FIG. 2. If all STAs in an MLD are access points (Access Point, AP), for example, a first AP (270) to an N$^{th}$ AP (280) in FIG. 2, the STAs may be further referred to as an access point multi-link device (Access Point Multi-Link Device, AP MLD, that is, a second MLD in this application), for example, a second MLD (260) in FIG. 2. There are N links between MLDs, where N is a positive integer, for example, a link 1 (240) to a link N (250) in FIG. 2.

3. Buffer sharing capability

The buffer sharing capability is a capability of sending buffer data by an AP MLD on a plurality of links through scheduling in a manner of using a trigger frame based physical protocol data unit (Trigger Based PHY Protocol Data Unit, TB PPDU).

A description form of "AP 1@AP MLD@link 1" in the following figure and text description indicates an AP 1 that works on a link 1 in an AP MLD, and may be the first AP (270) in FIG. 2. A description form "STA 1@non-AP MLD@link 1" indicates an STA 1 that works on a link 1 in a non-AP MLD, and may be the first STA(220) in FIG. 2. An AP 1@AP MLD@link 1 and an AP 2@AP MLD@link 2 belong to a same AP MLD, and may be a second MLD (260) in FIG. 2, and work on a link 1 and a link 2 respectively. An STA 1@non-AP MLD@link 1 and an STA 2@non-AP MLD@link 2 belong to a same non-AP MLD, and may be a first MLD (210) in FIG. 2, work on a link 1 and a link 2 respectively, and may be a link 1 (240) and a link N (250) in FIG. 2.

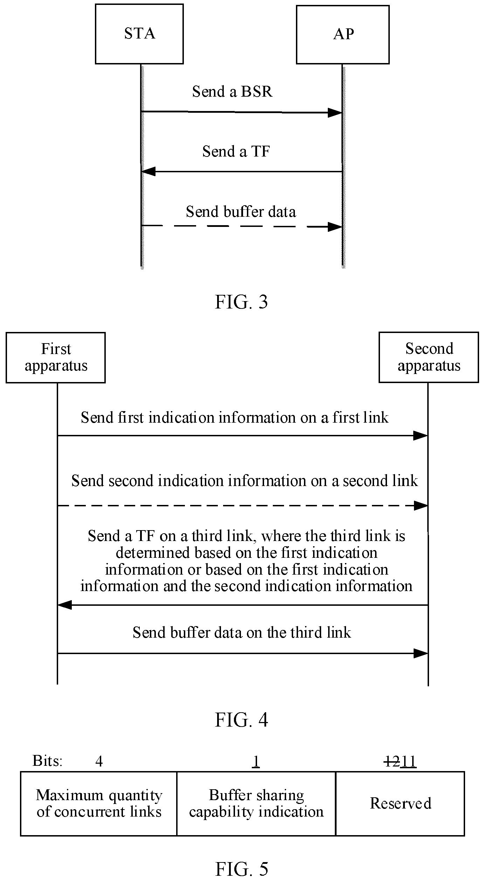

FIG. 3 is a schematic flowchart of uplink transmission scheduled based on a trigger frame (Trigger Frame, TF). A non-access point station (non-Access Point Station, non-AP STA) may report its buffer status by sending a buffer status report frame (Buffer State Report, BSR). After obtaining, through contention, the right to use a channel, an access point (Access Point, AP) sends a TF to schedule a non-AP STA to transmit uplink data. After receiving a TF, the non-AP STA performs high efficiency (High Efficiency, HE) uplink transmission on a corresponding resource unit (Resource Unit, RU) based on scheduling information and a trigger frame based physical protocol data unit (Trigger Based PHY Protocol Data Unit, TB PPDU).

In multi-link transmission, two STAs (an STA 1 and an STA2) in a non-AP MLD have respective buffers, but a data packet in a buffer of the STA 1@non-AP MLD@link 1 cannot be prepared on the link 2 within a short inter frame space (Short Inter Frame Space, SIFS) time, that is, cannot be transmitted on the link 2 after the SIFS time. That the buffer data described herein cannot be prepared may mean that the buffer data cannot be shared from the buffer of the STA 1@non-AP MLD@link 1 to the buffer of the STA 2@non-AP MLD@link 2 within the SIFS time, or the buffer data of the STA 1@non-AP MLD@link 1 cannot be shared with the STA 2@non-AP MLD@link 2 within the SIFS time. Conversely, a data packet in the buffer of the STA 2@non-AP MLD@link 2 cannot be prepared on the link 1 within the SIFS time, that is, cannot be transmitted on the link 1 after the SIFS time. It is assumed that the buffer of the STA 1 @non-AP MLD@link 1 has a buffered data packet and the buffered data packet is fed back to the AP 1 @AP MLD@link 1 by using a BSR, but the STA 2@non-AP MLD@link 2 does not have a buffered data packet. An AP MLD considers, by default, that a non-AP MLD has a capability of transmitting on two links. Therefore, after obtaining a channel use right on a link 2 through contention, an AP 2@AP MLD@link 2 sends a TF to schedule an STA 2@non-AP MLD@link 2 to send a TB PPDU on the link 2. However, because the data packet in the buffer of the STA 1 @non-AP MLD@link 1 cannot be prepared on the link 2 within the SIFS time, the STA 2@non-AP MLD@link 2 cannot transmit a data packet. Therefore, a padding bit of corresponding duration can be transmitted only based on uplink length (UL Length) in a TF, and uplink service information is not transmitted, causing a large waste of resources.

There is further a possible case: Within a period of time, an amount of data in the buffer of the STA 1 @non-AP MLD@link 1 is relatively small, and an amount of data in the buffer of the STA 2@non-AP MLD@link 2 is relatively large. The STA 1 @non-AP MLD@link 1 feeds back its buffer status to the AP 1@AP MLD@link 1 on the link 1 by using a BSR, but the STA2@non-AP MLD@link 2 has no opportunity to feed back its buffer status to the AP 2@AP MLD@link 2 within this period of time. The AP 1@AP MLD@link 1 schedules, on the link 1 by sending a TF and based on a buffer status fed back by the STA 1@non-AP MLD@link 1, the STA 1@non-AP MLD@link 1 to transmit uplink data. However, the AP 1@AP MLD@link 1 obtains only a buffer status on the STA 1 @non-AP MLD@link 1, and determines, based on the buffer status, that a quantity of services of the non-AP MLD is relatively small, so that only a relatively small quantity of resources are allocated to the non-AP MLD. Actually, a large amount of to-be-transmitted data is buffered in the buffer of the STA 2@non-AP MLD@link 2 that also belongs to the non-AP MLD, but the AP MLD is unaware of this, and does not allocate enough resources to the STA 2@non-AP MLD, causing a problem that a service requirement of the non-AP MLD is not met in time. In conclusion, an existing buffer reporting mechanism causes a problem that a buffer status report does not match an actual total resource requirement of an MLD.

To resolve the foregoing problem, an embodiment of this application provides a method shown in FIG. 4.

401: A first apparatus sends first indication information, where the first indication information indicates whether links of the first apparatus have a buffer sharing capability, and the buffer sharing capability indicates a link, that can send buffer data, of the first apparatus.

402: A second apparatus receives the first indication information.

In the method, whether the links of the first apparatus have the buffer sharing capability may be indicated to the second apparatus by sending indication information, resolving a problem that the second apparatus cannot obtain whether the links of the first apparatus have the buffer sharing capability. The second apparatus may use the first indication information as a reference factor to determine a scheduled link, avoiding a problem that the first apparatus cannot prepare buffer data of a link scheduled by the second apparatus.

It should be understood that the first apparatus may be a non-AP MLD or an AP MLD, and the second apparatus may be an AP MLD. This is not limited in this application.

It should be understood that an MLD in this application may be a terminal device or a network device. Both a station STA and an access point AP in this application are used as internal entities of the MLD. In other words, there may be a plurality of STAs or a plurality of APs in one MLD, the MLD includes N links, and N is a positive integer. Information is transmitted between the N STAs and the NAPs by using the N links. A correspondence between an STA and an AP may be determined when during network access, or may be preset. This is not limited in this application.

Optionally, the method may further include the following steps.

402: The first apparatus sends second indication information on a second link, where the second link is one of the N links, and the second indication information indicates a buffer status.

403: The second apparatus receives the second indication information, determines a third link based on the first indication information or based on the first indication information and the second indication information, and sends a TF on the link.

404: The first apparatus receives the TF on the third link, and transmits information in the link.

The second indication information may be a buffer status report (Buffer State Report, BSR).

In this method, a path for transmitting information by the first apparatus is determined based on the indication of the buffer sharing capability or based on the indication of the buffer sharing capability and buffer status report information. In this way, a problem that a scheduled link cannot share a buffer is avoided, a link that can completely send service information is further determined based on the buffer status, and furthermore, resources can be properly allocated, further improving information transmission flexibility.

The following describes the solution by using an example in which the first apparatus is a non-AP MLD (a first MLD) and the second apparatus is an AP MLD (a second MLD).

For example, the first MLD reports the buffer sharing capability to the second MLD by using indication information; and the second MLD receives the indication information, and determines, based on the indication information, whether links of the first MLD can share a buffer.

If the links of the first MLD can share the buffer, the second MLD may choose to send the TF on any link.

It should be understood that the link on which the second MLD sends the TF may be a link that is on which the second MLD competes for a channel usage right.

If the links of the first MLD cannot share the buffer, the second MLD may send the TF on the link on which the first MLD sends the BSR.

The first MLD receives the TF, and sends buffer data on the link on which the TF is located.

It should be understood that in the first MLD, all links may have the buffer sharing capability, or none of the links has the buffer sharing capability, or some links have the buffer sharing capability. When the first AP determines, based on the first indication information or the second indication information, the link for sending the TF, there may be another

For example, when the first indication information indicates that all links of the MLD have the buffer sharing capability, but for some other factors, for example, one of the links is closed after the second MLD receives the indication information, the second MLD excludes the link when determining the link for sending the TF.

It can be understood that after the indication information is received, similar cases are considered each time the second MLD determines the link for sending the TF.

It should be understood that a first STA belongs to a non-AP MLD, and the non-AP MLD may fill a buffer sharing information field in a frame or an information element (element) to indicate whether the MLD supports buffer sharing.

The following provides several specific manners of indicating the buffer sharing capability, and an example in which the buffer sharing capability is indicated in an MLD capability field (MLD Capability field) in a multi-link element (ML element) in IEEE 802.11be is used. It should be noted that the ML element is a preferred element for carrying signaling, but the buffer sharing information field may alternatively be carried in an extremely high throughput capability (Extremely High Throughput Capability element) or another newly created element field. This is not limited in this application.

It should be understood that the first MLD and the second MLD may transmit information by using an internal entity, for example, by using an STA and an AP.

For ease of understanding, the buffer sharing capabilities of the non-AP MLD are classified as follows:

Level 0: The AP sends a trigger frame (TF) without special processing, and the non-AP MLD may send uplink data by using a TB PPDU after a trigger frame SIFS, that is, the links of the MLD have the buffer sharing capability, and data can be prepared without a buffer sharing delay.

Level 1: The AP needs to perform, based on a parameter reported by the non-AP MLD, padding (padding) on a buffer delay of a sent trigger frame, so that the non-AP MLD has enough time to prepare to use a TB PPDU to send uplink data. That is, the links of the MLD can share the buffer, but a specific time is required for sharing.

Level 2: It takes a long time (for example, more hundred microseconds) for the non-AP MLD to schedule data internally, and it is not suitable to schedule the non-AP MLD by adding a long padding to the trigger frame by using the AP MLD. However, the AP MLD may first use a frame to notify the non-AP MLD to prepare to buffer data on a link. Then, after a time of waiting, the AP MLD schedules, by using a trigger frame, the non-AP MLD to send data, that is, the links of the MLD can share a buffer, but a time for sharing the buffer between the links is greater than a threshold.

Level 3: The non-AP MLD does not support buffer sharing, that is, a buffer of the non-AP MLD is based on a link or an STA, and buffer data for a link can be uploaded only through the link, that is, links of the MLD cannot share the buffer.

It should be understood that the foregoing classification is an example of classification of the MLD capabilities for ease of understanding. This is not limited in this application.

It should be further understood that none of the links of the MLD may have the buffer sharing capability, or some links may not have the buffer sharing capability. For different specific cases, different indication methods may be used. The following describes a specific indication manner in detail.

In a possible implementation, whether all links of the MLD have the buffer sharing capability may be indicated by using a field.

For example, a field is introduced in an MLD capability (MLD Capability) field in IEEE 802.11be for indication, as shown in FIG. 5.

It should be understood that the field may include one bit or a plurality of bits. This is not limited in this application.

A value 1 of a buffer sharing capability (Buffer Sharing Capability) indication field may represent that all links of the non-AP MLD can share a buffer. After receiving a trigger frame on any link, the first STA may send buffer data in an uplink manner by using a TB PPDU.

A value 0 of the buffer sharing capability (Buffer Sharing Capability) indication field may represent that the non-AP MLD can receive a trigger frame only on a link on which data of the first STA is buffered; and on this link, buffer data is sent in an uplink manner by using the TB PPDU. If the BSR is allowed to be sent only on a link on which data is buffered, the link for sending the BSR is the link on which the data is buffered. If the BSR is allowed to be sent on any link, a link corresponding to the BSR needs to be indicated in the BSR.

It should be understood that meanings represented by the values 0 and 1 may be interchanged. For example, if a value of the buffer sharing capability (Buffer Sharing Capability) indication field is 0, it may indicate that all links of the non-AP MLD can share a buffer. After a trigger frame is received on any link, buffer data may be sent in an uplink manner by using the TB PPDU. If the value is 1, it may indicate that among all links of the non-AP MLD, only the link on which the first STA sends the BSR can receive the trigger frame, and buffer data is sent on the link in an uplink manner by using the TB PPDU.

This implementation is applicable to a scenario in which all links of the non-AP MLD have a same buffer sharing capability, and all links can share the buffer, or all links cannot share the buffer. For example, this implementation is applicable to MLDs of the level 0 and level 3. In an actual application scenario, the buffer sharing capabilities of the links may be different.

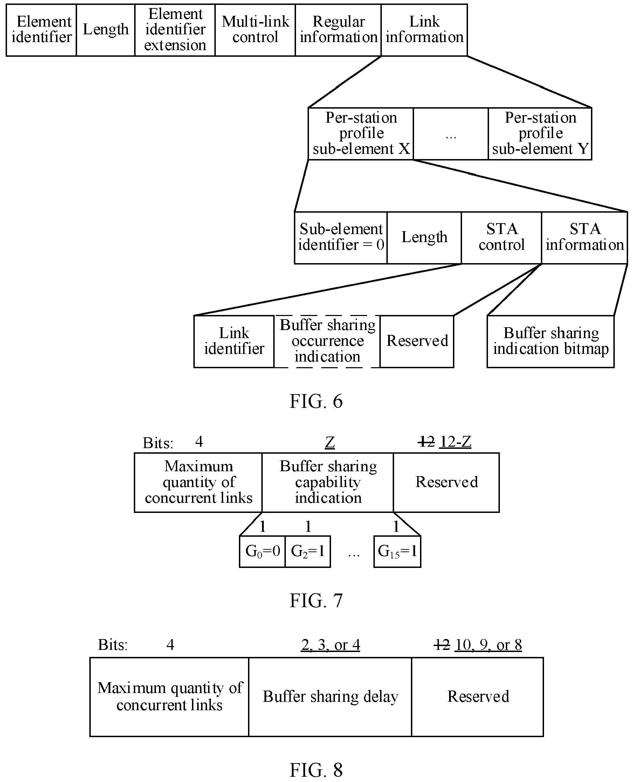

In a possible implementation, as shown in FIG. 6, a buffer sharing indication bitmap (Buffer Sharing Indication Bitmap) may be added to an STA information (the STA Info) field of a per-station profile sub-element, to indicate whether a pair of links have the buffer sharing capability. An $i^{th}$ bit in the buffer sharing indication bitmap in the per-station profile sub-element is used to indicate a buffer capability between the link corresponding to the per-station profile sub-element and a link whose link identifier is i.

Optionally, a buffer sharing indication (Buffer Sharing Indication) field may further be added to an STA control (STA Control) field of a per-station profile sub-element (Per-STAProfile subelement) of a basic variant multi-link element (Basic variant Multi-link element), to indicate whether a buffer sharing indication bitmap (Buffer Sharing Indication Bitmap) appears in an STA information (STA Info) field of the per-station profile sub-element.

Specifically, when the buffer sharing indication bitmap appears, and it is assumed that a length thereof is m bits, a bit i ($0 \leq i \leq m-1$) indicates whether a link corresponding to a link identifier link i included in the STA control field and a link corresponding to a link identifier in the per-station profile sub-element can share a buffer.

For example, a bit 6 indicates whether a link 6 and a link corresponding to the per-station profile sub-element can share a buffer. When a value of the bit 6 is 1, the links can share the buffer; and when the value of the bit 6 is 0, the links cannot share the buffer. Alternatively, when the value of the bit 6 is 1, the links cannot share the buffer; and when the value of the bit 6 is 0, the links can share the buffer.

It should be understood that two links with symmetric sharing capabilities can be indicated for a single time, and two links with asymmetric sharing capabilities need to be indicated with sharing capabilities in different directions, and signaling overheads need to be doubled. For example, the sharing capability between the link 6 and the link corresponding to the per-station profile sub-element needs to be indicated, the sharing capability between the link corresponding to the per-station profile sub-element and the link 6 also needs to be indicated.

In another possible implementation, as shown in FIG. 7, because a maximum of 16 links can be supported in the 11be standard, a total of 16 bits may be used to indicate the buffer sharing capability of links. Each link is indicated by using one bit.

For example, when a value of a bit corresponding to an $i^{th}$ link is 0, it indicates that the link i cannot share its buffer data with another link; or when a value of a bit corresponding to an $i^{th}$ link is 1, it indicates that the link i can share its buffer data with another link. In other words, a link whose bit value is 0 cannot share a buffer with another link, and a plurality of links whose bit values are 1 can share a buffer.

In still another possible implementation, one link may be indicated by using a plurality of bits, that is, by using one field, and the field includes at least two bits.

When the value of the field corresponding to the $i^{th}$ link is 0, it indicates that the link i cannot share the buffer data of the link i with another link. When a value of a bit corresponding to the $i^{th}$ link is not 0, it indicates that the link i can share the buffer data of the link i with another link with the same value.

That is, a link corresponding to a field whose value is 0 cannot share a buffer with another link, and a plurality of links corresponding to a field whose value is k (k>0) can share a buffer.

It should be understood that the value of the bit or the field in this application is merely an example. The value may be a first value or a second value. The first value and the second value may be determined based on changes in a quantity of bits and a number system. For example, the first value and the second value may be 0 or 1 in a unary numeral system, and may be corresponding values in another number system. This is not limited in this application.

In many scenarios, a quantity of links supported by an MLD does not exceed 8. To reduce signaling overheads, when none of link identifiers (link ID) exceeds 7, a buffer sharing capability length (Buffer Sharing Capability length) field may be introduced to indicate that a length of a buffer sharing capability (Buffer Sharing Capability) field is 8 or 16.

In a possible implementation, as shown in FIG. 8, the first indication information may further indicate a buffer sharing delay, and the delay may be a delay time required by a non-AP MLD to send buffer data in an uplink manner by using a TB PPDU frame. The buffer sharing delay of the MLD may be indicated by using a buffer sharing delay field.

It should be understood that the delay time may be a time other than a minimum trigger frame processing time (MinTrigProcTime) fed back by a single link, or may be total delay duration including a MinTrigProcTime fed back by a single link. A specific delay time may be clearly defined in a standard.

MinTrigProcTime is a parameter introduced in the IEEE802.1 1ax standard, and is reported by a non-AP STA to an AP to notify the non-AP STA of a time required for preparing uplink data after the non-AP STA receives a trigger frame for scheduling the non-AP STA.

It may be understood that when the delay time is the total delay duration including the MinTrigProcTime fed back by the single link, the value of the delay time is greater than or equal to a reported MinTrigProcTime.

Generally, a length of a buffer sharing delay field is greater than or equal to two bits. The following uses three bits as an example for description.

Usually, a value (for example, 0) of a buffer sharing delay indicates that a delay time is 0. In other words, the AP may send a trigger frame on any link, without additional padding on the trigger frame.

Optionally, a value of one buffer sharing delay, for example, 7, may be reserved, indicating that the delay time exceeds a preset threshold, that is, cross-link scheduling is not supported for the buffer data. In this case, the AP MLD needs to perform, by using a trigger frame, scheduling on a link on which the first STA sends the BSR, but cannot perform cross-link scheduling.

It should be understood that a correspondence between each value and a delay time may be obtained through calculation by using a formula, or may be enumerated in a table in a standard. This is not limited in this application.

This implementation is applicable to a scenario in which the buffer sharing capabilities of the links in the non-AP MLD are the same, that is, delay times of non-APs in the MLD are the same. In an actual application scenario, the buffer sharing delays of the links may be different.

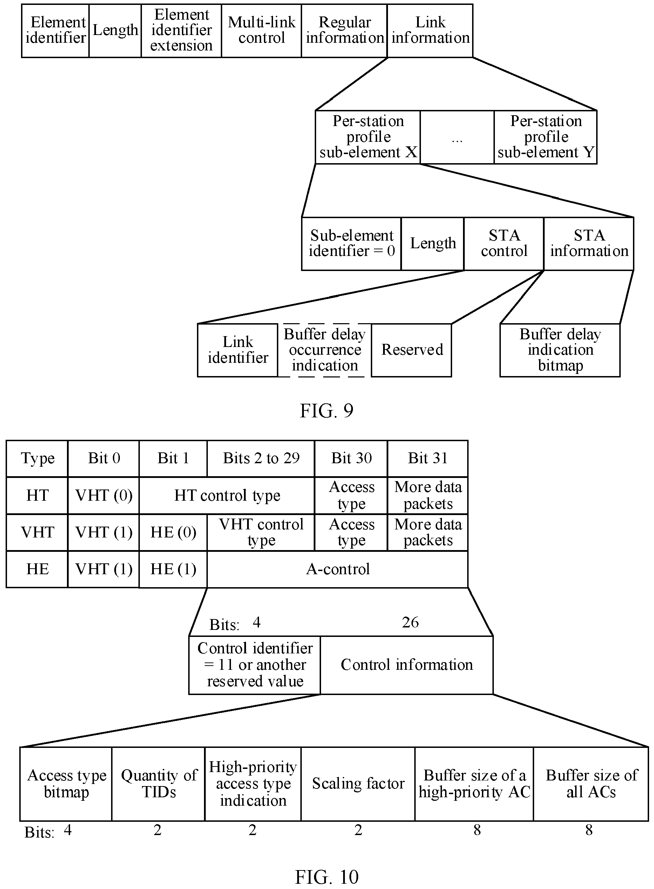

In a possible implementation, as shown in FIG. 9, a buffer delay indication (Buffer Delay Indication) may be added to an STA information (STA Info) field of a per-station profile sub-element (Per-STA Profile subelement). The buffer delay indication includes several sub-fields, and each sub-field may be used to indicate a buffer sharing delay time between a pair of links. For example, an $i^{th}$ sub-field is used to indicate a buffer sharing delay time between a link corresponding to the per-station profile sub-element and a link with a link identifier i.

Optionally, a buffer delay indication (Buffer Delay Indication) field is added to an STA control (STA Control) field of a per-station profile sub-element (Per-STA Profile subelement) of a basic variant multi-link element (Basic variant Multi-link element) to indicate whether a buffer delay indication (Buffer Delay Indication Bitmap) appears in an STA information (STA Info) field of the per-station profile sub-element (Per-STA Profile subelement).

When the buffer delay indication bitmap (Buffer Delay Indication Bitmap) appears, k or k-1 sub-fields are included. If there are k sub-fields, a sub-field j ($0 \leq j \leq$ k-1) represents a sharing delay between a link whose link identifier is link j in the station control information and a link corresponding to a link identifier included in the per-station profile sub-element. If there are k-1 sub-fields, and it is assumed that a link identifier corresponding to the per-station profile sub-element is s, when j < s, a sub-field j ($0 \leq j \leq$ k-2) represents a sharing delay between a link whose link identifier is link j in the station control information and a link corresponding to a link identifier included in the per-station profile sub-element; and when j $\geq$ k, a sub-field j ($0 \leq j \leq$ k-2) represents a sharing delay between a link whose link identifier is link j+1 in the station control information and a link corresponding to a link identifier included in the per-station profile sub-element.

It should be understood that the foregoing magnitude relationship is used as an example rather than a limitation.

In FIG. 9, sharing capabilities between one link pairs are symmetric. For example, a delay in sharing buffer data from a link 1 to a link 2 is equal to a delay in sharing buffer data from the link 2 to the link 1. If the sharing capabilities of two links are not symmetrical, sharing capabilities in different directions of each link pair further need to be indicated, to be specific, a delay shared by the link 1 with the link 2 and a delay shared by the link 2 with the link 1 need to be indicated. In this way, signaling overheads need to be doubled.

In the foregoing embodiment, the buffer sharing capability of the non-AP STA is indicated to the AP by adding indication information. The AP may determine, based on content of the indication information, a link for scheduling the non-AP STA to send buffer data, avoiding a problem that many resources are wasted because the non-AP STA does not prepare buffer data on the link scheduled by the AP and can transmit only a padding bit of corresponding duration based on uplink length (UL Length) in a TF, and therefore cannot transmit uplink service information.

In another embodiment of this application, a buffer status reporting method is proposed to add a rule constraint to a standard. In this manner, an existing IEEE 802.11ax buffer status report (Buffer State Report, BSR) frame structure does not need to be modified, but the following constraint is required:

A BSR reported by a non-AP STA having a buffer sharing capability is a total buffer status of the non-AP MLD, that is, all buffer statuses of all STAs belonging to the non-AP MLD.

A BSR reported by a non-AP STA without the buffer sharing capability is merely a buffer status of the STA.

In still another embodiment of this application, a new A-control (A-Control) type is introduced, one bit indicates whether feedback content is link-based or MLD-based, and remaining bits are used to indicate a specific buffer size.

It should be understood that the indication information may be that a new control identifier (Control ID) field is designed, and an unoccupied bit is used for indication, or a bit in an existing control information (Control Information) field may be reused.

Considering that after multi-link communication is introduced in the embodiments of this application, a frame structure needs to be improved.

In yet another embodiment of this application, as shown in FIG. 10, a new A-control (A-Control) type is introduced, and a new A-control (A-Control) type frame is introduced to indicate multi-link level buffer status report information. An A-control field in IEEE 802.1 1ax is used. A control identifier field in the A-control field is an existing reserved value (for example, 11), indicating a multi-link level buffer status report. The control information field includes a plurality of sub-fields. A setting is the same as a sub-field setting of an existing BSR in IEEE 802.1 1ax, and a difference lies in that a value of a scaling factor (Scaling Factor) field changes, as shown in Table 1.

**Table 1 Relationship between the value of the scaling factor field and a meaning of the scaling factor**

| Value of the scaling factor field | Meaning of the scaling factor (unit: byte) |
| --- | --- |
| 0 | 32 |
| 1 | 512 |
| 2 | 8192 |
| 3 | 131072 |

It should be understood that Table 1 is used as an example rather than a limitation, and may be partially or completely used as an application.

In another embodiment of this application, a new A-control type does not need to be additionally introduced, and a BSR frame structure of IEEE 802.11ax is reused. The BSR frame in IEEE 802.11ax also uses the A-control frame structure, and a value of a control identifier field of the BSR frame is fixed to 3.

A BSR reported by a non-AP STA corresponding to a link having a buffer sharing capability may be a total buffer status of a multi-link level. In this case, the meaning of the value of the scaling factor field of the BSR frame is the same as that in Table 1.

A BSR reported by a non-AP STA corresponding to a link that without a buffer sharing capability may be a buffer status of the non-AP STA, and a meaning of a value of a scaling factor field of a BSR frame is consistent with that in existing IEEE 802.11ax.

In this solution, a constraint rule is designed and/or a new A-control (A-Control) type is introduced. Whether the BSR reported by the non-AP STA is a total buffer status of the non-AP MLD or the buffer status of the non-AP STA is indicated to the AP according to indication information. After receiving the indication information and the buffer status, the AP may properly allocate a resource, avoiding a problem that the buffer status report does not match an actual total MLD resource requirement, facilitating integrity of service transmission, and improving service transmission flexibility.

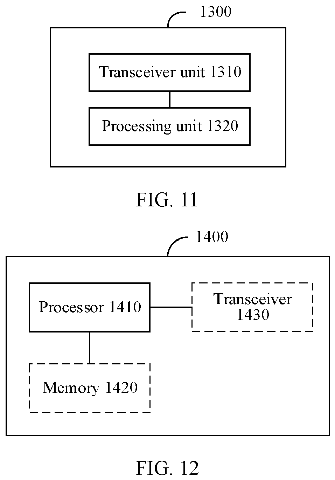

Same as the foregoing concept, as shown in FIG. 11, an embodiment of this application further provides an apparatus 1300, configured to implement a function of the network device or the terminal device in the foregoing methods. For example, the apparatus may be a software module or a chip system. In this embodiment of this application, the chip system may include a chip, or may include a chip and another discrete component. The apparatus 1300 may include a processing unit 1310 and a communication unit 1320.

In this embodiment of this application, the communication unit may also be referred to as a transceiver unit, and may include a sending unit and/or a receiving unit, respectively configured to perform sending and receiving steps of the first MLD and/or the second MLD in the foregoing method embodiments.

The following describes in detail a communication apparatus provided in embodiments of this application with reference to FIG. 11 and FIG. 12. It should be understood that descriptions of apparatus embodiments correspond to the descriptions of the method embodiments. Therefore, for content that is not described in detail, refer to the foregoing method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 1320 and that is configured to implement a receiving function may be considered as a receiving unit, and a component that is in the communication unit 1320 and that is configured to implement a sending function may be considered as a sending unit. In other words, the communication unit 1320 includes the receiving unit and the sending unit. The communication unit sometimes may also be referred to as a transceiver machine, a transceiver, an interface circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 1300 performs the functions of the first MLD in the procedure shown in any one of FIG. 3 to FIG. 10 in the foregoing embodiments:

the processing unit is configured to complete preparation of buffer data based on information of the second MLD or based on a preset resource for transmitting information; and
the communications unit is configured to receive and send information, for example, send indication information and receive a TF.

When the communication apparatus 1300 performs the functions of the second MLD in the procedure shown in any one of FIG. 3 to FIG. 10 in the foregoing embodiments:

the processing unit is configured to configure a resource or determine whether links of the first MLD have a buffer sharing capability; and
the communications unit is configured to receive and send information, for example, send a TF or receive indication information.

The foregoing is merely an example. The processing unit 1310 and the communication unit 1320 may further perform other functions. For more detailed descriptions, refer to related descriptions in the method embodiments shown in FIG. 3 to FIG. 10 or other method embodiments. Details are not described herein again.

FIG. 12 shows an apparatus 1400 according to an embodiment of this application. The apparatus shown in FIG. 12 may be an implementation of a hardware circuit of the apparatus shown in FIG. 11. The communication apparatus is applicable to the foregoing flowcharts, and performs the functions of the terminal device or the network device in the foregoing method embodiments. For ease of description, FIG. 12 merely shows main components of the communication apparatus.

As shown in FIG. 12, the communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the methods shown in FIG. 3 to FIG. 10, the processor 1410 is configured to implement the functions of the processing unit 1310, and the interface circuit 1420 is configured to implement the functions of the communication unit 1320.

When the communication apparatus is a chip used in a terminal device, the chip in the terminal device implements the functions of the terminal device in the foregoing method embodiments. The chip of the terminal device receives information from another module (for example, a radio frequency module or an antenna) in the terminal device, where the information is sent by a network device to the terminal device; or the chip of the terminal device sends information to another module (for example, a radio frequency module or an antenna) in the terminal device, where the information is sent by the terminal device to a network device.

When the communication apparatus is a chip used in a network device, the chip in the network device implements the functions of the network device in the foregoing method embodiments. The chip of the network device receives information from another module (for example, a radio frequency module or an antenna) in the network device, where the information is sent by a terminal device to the network device; or the chip of the network device sends information to another module (for example, a radio frequency module or an antenna) in the network device, where the information is sent by the network device to a terminal device.

It can be understood that the processor in the embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor.

In the embodiments of this application, the processor may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

In another embodiment of this application, a computer program product is provided. When a computer program included in the computer program product is run on a computer, the method in the foregoing embodiments may be performed.

A person skilled in the art should understand that the embodiments of this application may be provided as a method, a system, or a computer program product. Therefore, this application may use a form of an entire hardware embodiment, an entire software embodiment, or an embodiment with a combination of software and hardware aspects. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that each procedure and/or block in the flowcharts and/or the block diagrams and/or a combination of procedures and/or blocks in the flowcharts and/or the block diagrams may be implemented by using computer program instructions. These computer program instructions may be provided to a processor of a general-purpose computer, a special-purpose computer, an embedded processor, or another programmable data processing device to produce a machine, so that the instructions executed by a processor of a computer or another programmable data processing device generates an apparatus for implementing a function specified in one or more procedures in a flowchart and/or in one or more blocks in a block diagram.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Apparently, a person skilled in the art may make various modifications and variations to this application without departing from the scope of this application. In this way, if these modifications and variations of this application fall within the scope of the claims of this application and their equivalent technologies, this application is also intended to cover these modifications and variations.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information transmission method, applied to a first multi-link device MLD, wherein the first MLD comprises N stations STAs, the N STAs relate to N links, N is a positive integer, and the method comprises:
sending, by the first MLD, first indication information on a first link, wherein the first indication information indicates whether links of the first MLD have a buffer sharing capability, the buffer sharing capability is used to determine a link corresponding to to-be-sent buffer data in the first MLD, and the first link is one of the N links.

2. The method according to claim 1, further comprising:
sending, by the first MLD, second indication information on a second link, wherein the second link is one of the N links, the second indication information indicates a buffer status, the second link corresponds to a first STA, and the to-be-sent buffer data is buffer data of the first STA.

3. The method according to claim 2, wherein the second indication information comprises a first field, and the first field is used to indicate a buffer size of a buffer; and

if the first indication information indicates that the links of the first MLD have the buffer sharing capability, the first field is used to indicate a buffer size of a buffer of the first MLD; or
if the first indication information indicates that the links of the first MLD do not have the buffer sharing capability, the first field is used to indicate a buffer size of a buffer of the first STA.

4. The method according to claim 2 or 3, wherein the second indication information comprises a second field, and the second field is used to indicate that the buffer status is a buffer status of the first STA or a buffer status of the first MLD.

5. The method according to any one of claims 2 to 4, further comprising:

receiving, by the first MLD, a trigger frame TF on a third link, wherein the third link is determined based on the first indication information or based on the first indication information and the second indication information; and
sending, by the first MLD, the buffer data of the first STA on the third link.

6. The method according to claim 5, wherein that the third link is determined based on the first indication information or based on the first indication information and the second indication information comprises:

the first indication information indicates that the links of the first MLD do not have the buffer sharing capability, and the third link is the second link; or
the first indication information indicates that the links of the first MLD have the buffer sharing capability, and the third link is one of the links having the buffer sharing capability.

7. The method according to any one of claims 1 to 6, wherein the first indication information comprises a third field; and

when a value of the third field is a first value, it indicates that any two of the N links have the buffer sharing capability, and when the value of the third field is a second value, it indicates that any two of the N links do not have the buffer sharing capability, or
when the value of the third field is the first value, it indicates that any two of the N links do not have the buffer sharing capability, and when the value of the third field is the second value, it indicates that any two of the N links have the buffer sharing capability.

8. The method according to claim 7, wherein the first indication information is located in a multi-link device capability MLD Capability field

9. The method according to any one of claims 1 to 6, wherein the first indication information comprises a buffer sharing delay field, and the buffer sharing delay field is used to indicate a delay between a time for receiving the TF by the first MLD and a time for sending the to-be-sent buffer data.

10. The method according to claim 9, wherein when a value of the buffer sharing delay field is a first preset value, it indicates that any two of the N links do not have the buffer sharing capability.

11. The method according to claim 9 or 10, wherein the buffer sharing delay field is located in a multi-link device capability MLD capability field

12. The method according to any one of claims 1 to 6, wherein the first indication information comprises a buffer sharing indication field, the buffer sharing indication field comprises a buffer sharing indication bitmap, the buffer sharing indication bitmap comprises m bits, a value of an $i^{th}$ bit is used to indicate whether links comprised in a first link pair have the buffer sharing capability, the links comprised in the first link pair are a link indicated by a first link identifier and a link with a link identifier i ($0 \leq i \leq m-1$), the first link identifier is a link identifier comprised in a station control information field in a per-station profile sub-element, and the buffer sharing indication bitmap is located in station information STA Info in the per-station profile sub-element.

13. The method according to claim 12, wherein when the value of the $i^{th}$ bit in the buffer sharing indication bitmap is 1, it indicates that the links comprised in the first link pair have the buffer sharing capability, and when the value of the $i^{th}$ bit in the buffer sharing indication bitmap is 0, it indicates that the links comprised in the first link pair do not have the buffer sharing capability; or

   when the value of the $i^{th}$ bit in the buffer sharing indication bitmap is 1, it indicates that the links comprised in the first link pair do not have the buffer sharing capability, and when the value of the $i^{th}$ bit in the buffer sharing indication bitmap is 0, it indicates that the links comprised in the first link pair have the buffer sharing capability

14. The method according to claim 12 or 13, wherein the per-station profile sub-element further comprises a buffer sharing indication, and the buffer sharing indication indicates whether the buffer sharing indication bitmap appears in the STA Info.

15. The method according to any one of claims 1 to 6, wherein the first indication information comprises a buffer sharing capability indication bitmap, the buffer sharing capability indication bitmap comprises N fields, the N fields are in a one-to-one correspondence with the N links, and each field comprises one bit; and

   a link corresponding to a field whose value is 0 has the buffer sharing capability with a link corresponding to another field whose value is 0, and a link corresponding to a field whose value is 1 does not have the buffer sharing capability with any other link; or
   a link corresponding to a field whose value is 0 does not have the buffer sharing capability with any other link, and a link corresponding to a field whose value is 1 has the buffer sharing capability with another field whose value is 1.

16. The method according to any one of claims 1 to 6, wherein the first indication information comprises a buffer sharing capability indication bitmap, the buffer sharing capability indication bitmap comprises N fields, each of the N fields comprises at least two bits, and the N fields are in a one-to-one correspondence with the N links; and
   a link corresponding to a field whose value is a third value does not have the buffer sharing capability with any other link, and a link corresponding to a field whose value is not the third value has the buffer sharing capability with a link corresponding to a field having a same value.

17. An information transmission method, applied to a second multi-link device MLD, wherein the second MLD comprises N access points APs, the N APs relate to N links, N is a positive integer, and the method comprises:
   receiving, by the second MLD, first indication information on a first link, wherein the first indication information indicates whether links of a first MLD have a buffer sharing capability, the buffer sharing capability is used by the second MLD to determine a link corresponding to to-be-received buffer data, and the first link is one of the N links

18. The method according to claim 17, further comprising:
   receiving, by the second MLD, second indication information on a second link, wherein the second link is one of the N links, the second indication information indicates a buffer status, the second link corresponds to a first STA, and the to-be-received buffer data is buffer data of the first STA.

19. The method according to claim 18, wherein the second indication information comprises a first field, and the first field is used to indicate a buffer size of a buffer; and

if the first indication information indicates that the links of the second MLD have the buffer sharing capability, the first field is used to indicate a buffer size of a buffer of the first MLD; or
if the first indication information indicates that the links of the second MLD do not have the buffer sharing capability, the first field is used to indicate a buffer size of a buffer of the first STA.

20. The method according to claim 18 or 19, wherein the second indication information comprises a second field, and the second field is used to indicate that the buffer status is a buffer status of the first STA or a buffer status of the first MLD.

21. The method according to any one of claims 18 to 20, further comprising:

sending, by the second MLD, a trigger frame TF on a third link, wherein the third link is determined based on the first indication information or based on the first indication information and the second indication information; and
receiving, by the second MLD, the buffer data of the first STA on the third link.

22. The method according to claim 21, wherein that the third link is determined based on the first indication information or based on the first indication information and the second indication information comprises:

the first indication information indicates that the links of the second MLD do not have the buffer sharing capability, and the third link is the second link; or
the first indication information indicates that the links of the second MLD have the buffer sharing capability, and the third link is one of the links having the buffer sharing capability.

23. The method according to any one of claims 17 to 22, wherein the first indication information comprises a third field; and

when a value of the third field is a first value, it indicates that any two of the N links have the buffer sharing capability, and when the value of the third field is a second value, it indicates that any two of the N links do not have the buffer sharing capability, or
when the value of the third field is the first value, it indicates that any two of the N links do not have the buffer sharing capability, and when the value of the third field is the second value, it indicates that any two of the N links have the buffer sharing capability.

24. The method according to claim 23, wherein the first indication information is located in a multi-link device capability MLD capability field

25. The method according to any one of claims 17 to 22, wherein the first indication information comprises a buffer sharing delay field, and the buffer sharing delay field is used to indicate a delay between a time for receiving the TF by the first MLD and a time for sending the buffer data of the first STA.

26. The method according to claim 25, wherein when a value of the buffer sharing delay field is a first preset value, it indicates that any two of the N links do not have the buffer sharing capability.

27. The method according to claim 25 or 26, wherein the buffer sharing delay field is located in a multi-link device capability MLD capability field

28. The method according to any one of claims 17 to 22, wherein the first indication information comprises a buffer sharing indication field, the buffer sharing indication field comprises a buffer sharing indication bitmap, the buffer sharing indication bitmap comprises m bits, a value of an $i^{th}$ bit is used to indicate whether links comprised in a first link pair have the buffer sharing capability, the links comprised in the first link pair are a link indicated by a first link identifier and a link with a link identifier i ($0 \leq i \leq m-1$), the first link identifier is a link identifier comprised in a station control information field in a per-station profile sub-element, and the buffer sharing indication bitmap is located in station information STA Info in the per-station profile sub-element.

29. The method according to claim 28, wherein when the value of the $i^{th}$ bit in the buffer sharing indication bitmap is 1, it indicates that the links comprised in the first link pair have the buffer sharing capability, and when the value of the $i^{th}$ bit in the buffer sharing indication bitmap is 0, it indicates that the links comprised in the first link pair do not have the buffer sharing capability; or
when the value of the $i^{th}$ bit in the buffer sharing indication bitmap is 1, it indicates that the links comprised in the first link pair do not have the buffer sharing capability, and when the value of the $i^{th}$ bit in the buffer sharing indication bitmap is 0, it indicates that the links comprised in the first link pair have the buffer sharing capability

30. The method according to claim 28 or 29, wherein the per-station profile sub-element further comprises a buffer sharing indication, and the buffer sharing indication indicates whether the buffer sharing indication bitmap appears in the STA Info.

31. The method according to any one of claims 17 to 22, wherein the first indication information comprises a buffer sharing capability indication bitmap, the buffer sharing capability indication bitmap comprises N fields, the N fields are in a one-to-one correspondence with the N links, and each field comprises one bit; and

a link corresponding to a field whose value is 0 has the buffer sharing capability with a link corresponding to another field whose value is 0, and a link corresponding to a field whose value is 1 does not have the buffer sharing capability with any other link; or
a link corresponding to a field whose value is 0 does not have the buffer sharing capability with any other link, and a link corresponding to a field whose value is 1 has the buffer sharing capability with another field whose value is 1.

32. The method according to any one of claims 17 to 22, wherein the first indication information comprises a buffer sharing capability indication bitmap, the buffer sharing capability indication bitmap comprises N fields, each of the N fields comprises at least two bits, and the N fields are in a one-to-one correspondence with the N links; and
a link corresponding to a field whose value is a third value does not have the buffer sharing capability with any other link, and a link corresponding to a field whose value is not the third value has the buffer sharing capability with a link corresponding to a field having a same value.

33. A communication apparatus, wherein the communication apparatus is configured to perform the method according to any one of claims 1 to 16 and/or 17 to 32.

34. A computer program product, comprising a computer program, wherein when the computer program is run on a computer, the computer is enabled to perform the method according to any one of claims 1 to 16 and/or 17 to 32.

Terminal device 130

Terminal
device 150

Network device 120

Terminal device 140

FIG. 1

210

260

240

First MLD

First STA

Second MLD

First AP

270

Link 1

220

Nth STA

Link N

Nth AP

280

230

250

FIG. 2

FIG. 3

FIG. 4

| Bits: 4 | 1 | ~~12~~11 |
|---|---|---|
| Maximum quantity of concurrent links | Buffer sharing capability indication | Reserved |

FIG. 5

| Element identifier | Length | Element identifier extension | Multi-link control | Regular information | Link information |
|---|---|---|---|---|---|

| Per-station profile sub-element X | ... | Per-station profile sub-element Y |
|---|---|---|

| Sub-element identifier = 0 | Length | STA control | STA information |
|---|---|---|---|

| Link identifier | Buffer sharing occurrence indication | Reserved |
|---|---|---|

| Buffer sharing indication bitmap |
|---|

FIG. 6

| Bits: | 4 | $Z$ | ~~12~~ 12-Z |
|---|---|---|---|
| | Maximum quantity of concurrent links | Buffer sharing capability indication | Reserved |

| | 1 | 1 | | 1 |
|---|---|---|---|---|
| | $G_0=0$ | $G_2=1$ | ... | $G_{15}=1$ |

FIG. 7

| Bits: | 4 | 2, 3, or 4 | ~~12~~ 10, 9, or 8 |
|---|---|---|---|
| | Maximum quantity of concurrent links | Buffer sharing delay | Reserved |

FIG. 8

| Element identifier | Length | Element identifier extension | Multi-link control | Regular information | Link information |
|---|---|---|---|---|---|

| Per-station profile sub-element X | ... | Per-station profile sub-element Y |
|---|---|---|

| Sub-element identifier = 0 | Length | STA control | STA information |
|---|---|---|---|

| Link identifier | Buffer delay occurrence indication | Reserved | Buffer delay indication bitmap |
|---|---|---|---|

FIG. 9

| Type | Bit 0 | Bit 1 | Bits 2 to 29 | Bit 30 | Bit 31 |
|---|---|---|---|---|---|
| HT | VHT (0) | HT control type | | Access type | More data packets |
| VHT | VHT (1) | HE (0) | VHT control type | Access type | More data packets |
| HE | VHT (1) | HE (1) | A-control | | |

| Bits: 4 | 26 |
|---|---|
| Control identifier = 11 or another reserved value | Control information |

| Access type bitmap | Quantity of TIDs | High-priority access type indication | Scaling factor | Buffer size of a high-priority AC | Buffer size of all ACs |
|---|---|---|---|---|---|
| Bits: 4 | 2 | 2 | 2 | 8 | 8 |

FIG. 10

1300

Transceiver unit 1310

Processing unit 1320

FIG. 11

1400

Processor 1410

Transceiver 1430

Memory 1420

FIG. 12

## INTERNATIONAL SEARCH REPORT

International application No.

**PCT/CN2022/087878**

### A. CLASSIFICATION OF SUBJECT MATTER

H04W 72/12(2009.01)i

According to International Patent Classification (IPC) or to both national classification and IPC

### B. FIELDS SEARCHED

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 多链路, 多连接, 指示, 缓存, 共享, 分享, 能力, 支持, multi-link, multiple connection, indicate, buffer, share, capability, ability, support, BSR, buffer status report, MLD

### C. DOCUMENTS CONSIDERED TO BE RELEVANT

| Category* | Citation of document, with indication, where appropriate, of the relevant passages | Relevant to claim No. |
|---|---|---|
| A | CN 112188644 A (HUAWEI TECHNOLOGIES CO., LTD.) 05 January 2021 (2021-01-05) description, paragraphs 0066-0133 | 1-34 |
| A | CN 112218336 A (HUAWEI TECHNOLOGIES CO., LTD.) 12 January 2021 (2021-01-12) entire document | 1-34 |
| A | CN 107645778 A (ZTE CORP.) 30 January 2018 (2018-01-30) entire document | 1-34 |
| A | ETSI MCC. "Report of 3GPP TSG RAN2#107bis meeting, Chongqing, China" *3GPP TSG-RAN WG2 meeting #108 R2-1914301*, 18 October 2019 (2019-10-18), section 6.1.4 | 1-34 |
| A | US 2018020372 A1 (CANON KABUSHIKI KAISHA) 18 January 2018 (2018-01-18) entire document | 1-34 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 June 2022** | **27 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/087878**

| Patent document cited in search report | | | Publication date (day/month/year) | Patent family member(s) | | | Publication date (day/month/year) |
|---|---|---|---|---|---|---|---|
| CN | 112188644 | A | 05 January 2021 | None | | | |
| CN | 112218336 | A | 12 January 2021 | None | | | |
| CN | 107645778 | A | 30 January 2018 | WO | 2018014503 | A1 | 25 January 2018 |
| US | 2018020372 | A1 | 18 January 2018 | GB | 201612194 | D0 | 24 August 2016 |

Form PCT/ISA/210 (patent family annex) (January 2015)

**EP 4 333 532 A1**

**REFERENCES CITED IN THE DESCRIPTION**

**Patent documents cited in the description**

- CN 202110483824